Europäisches Patentamt

European Patent Office

Office européen des brevets

(11) Publication number: 0 217 336
A1

# EUROPEAN PATENT APPLICATION

(21) Application number: 86113369.2

(22) Date of filing: 29.09.86

(51) Int. Cl.⁴: B25J 19/00 , H02G 11/00

(30) Priority: 01.10.85 JP 218746/85

(43) Date of publication of application:
08.04.87 Bulletin 87/15

(84) Designated Contracting States:
DE FR GB SE

(71) Applicant: Kabushiki Kaisha Toshiba
72, Horikawa-cho Saiwai-ku
Kawasaki-shi Kanagawa-ken 210(JP)

(72) Inventor: Itagaki, Akiyoshi
305, Asahi Sun Rise Kawasaki 27-18,
Nisshin-Cho
Kawasaki-Ku Kawasaki-Shi
Kanagawa-Ken(JP)
Inventor: Sakamoto, Shotaka
1-C, Mihama Corpo., 2-1-47 Inadazutsumi
Suge
Tama-Ku Kawasaki-Shi Kanagawa-Ken(JP)

(74) Representative: Münzhuber, Robert,
Dipl.-Phys.
Patentanwalt Rumfordstrasse 10
D-8000 München 5(DE)

(54) Rotating and driving device.

(57) The rotating and driving device comprises a cylindrical base structure (21) and a rotatable base (23) supported by the base structure. The device further includes a belt-shaped cable assembly (40,43) extended into the rotatable base through the cylindrical base structure and a portion of the belt-shaped cable assembly passing through the base structure is wound around the base structure. The belt-shaped cable assembly comprises in the preferred embodiment cable means (40) comprising a plurality of power cables and control cables (41) and resilient members (43) to impart a resilient force to the portion of the belt-shaped cable assembly.

FIG. 2

## ROTATING AND DRIVING DEVICE

### BACKGROUND OF THE INVENTION

This invention relates to an improved construction of a device to be used for rotating and driving a rotatable member such as an industrial robot relative to a stationary portion of the same.

Ordinarily, an industrial robot comprises an arm portion secured to a rotatable base and a wrist portion rotatably secured to the arm portion. Various cables are extended through these portions to a robot controller for supplying power to driving motors provided in these portions and transmitting signals for determining the positions of the same.

FIG. I illustrates a conventional construction of the rotating and driving device of the type described above. Below a rotatable base I supporting the main portion (not shown) of, for instance, a robot is provided a base structure 3 of a conical shape having a recessed portion 2 opening upwardly. The rotatable base I is rotatably supported by the base structure 3 through a bearing 4 provided in the recessed portion 2. An output shaft (not shown) of a speed-reduction mechanism 5 located in the recessed portion 2 of the base structure 3 is coupled with the rotatable base I, while an input shaft 6 of the mechanism 5 is rotatably supported by the rotatable base I through a bearing 7 and a bearing supporting plate 8. A pulley 9 which transmits a rotating force of a motor (not shown) is secured to the input shaft 6.

A cable assembly I0 including a number of power cables and controlling cables is downwardly extended through a cable inserting hole II provided in the rotatable base I so as to be wound around the tapered side wall 3a of the conical base structure 3 in a helical manner. The lower end portion of the cable assembly I0 is further extended outwardly through a hole I2 provided in the base structure 3.

In the conventional rotating and driving device of the type described above, when a motor is operated, the driving force of the motor is transmitted through the speed-reduction mechanism 5 to the rotatable base I so that the rotatable base I is rotated at a low speed in the forward or rearward direction. In this case, the cable assembly I0 is moved in a sliding manner upward or downward, or in the rotating direction of the rotatable base I along the surface of the tapered wall 3a of the base structure 3.

Recently, robots are widely used in various fields of industry, and the size and the weight of works or materials processed or handled by the robot have been remarkably increased. The quick response to the changing of the operation speed is also required. As a consequence, the capacity of a driving motor for the robot is increased and a transmission mechanism is also enlarged, thus increasing the whole structure of the robot handling system. The enlargement of the whole structure of the robot rotating and driving mechanism requires for the tapered portion 3a of the stationary base 3 to have an increased height, which in turn increases the height of the operation range of the wrist of the robot, and accordingly, the center of the operation range of the robot is inevitably shifted to an upper position, thus being inconvenient for handling or managing the whole structure. This problem constitutes an obstacle to developement of large-size robots. Moreover, the shifting of the bearing supporting portion of the rotatable base I to a high position requires an additional rigidity in the bearing portion of the base 3, which also increases the size of the robot as well as the floor area required for installing the robot. In addition, with the conventional construction, the cable assembly wound herically around the base structure 3 is caused to slide along the tapered surface 3a of the structure, thus entailing a disadvantage of the cable surface being worn out and damaging the cable assembly in a short period.

### SUMMARY OF THE INVENTION

An object of this invention is to provide a rotating and driving device, wherein the difficulties of the conventional device can be substantially eliminated.

Another object of this invention is to provide a rotating and driving device wherein the size of the base structure and hence a floor area required for installing the base structure can be minimized regardless of an increase in the rigidity and the operation speed of the device.

Further object of the invention is to provide a rotating and driving device wherein frictions and hence wear of the cable assembly can be substantially reduced regardless of the reduced size of the base structure.

These and other objects of the invention can be achieved by an improved rotating and driving device, which comprises a vertically disposed hollow cylindrical base structure opening upwardly, and a rotatable base rotatably supported by the base structure, characterized in that a belt-shaped cable assembly is extended into the rotatable base through the cylindrical base structure, and a portion of the belt-shaped cable assembly passing through the base structure is wound around the rotatable base in a horizontally wound spiral manner. Preferably, the belt-shaped cable assembly comprises cable means including a plurality of power cable and control cables combined with each other in an integral manner and a plurality of resilient members combined with the cable means at the portion of the cable assembly passing through the base structure so as to impart a resilient force to the portion of the cable assembly.

Furthermore, a circular plate made of a friction-reducing material may be placed on the bottom of the base structure for reducing friction and wear of said cable assembly extended within said base structure in a spiral wound manner.

Preferably, the resilient member may be a flat spiral spring or a piano wire.

## BRIEF DESCRIPTION OF THE DRAWINGS

In the accompanying drawings:

FIG. 1 is a longitudinal sectional view showing a rotating and driving device of a conventional construction;

FIG. 2 is a longitudinal sectional view showing a rotating and driving device constituting a preferred embodiment of this invention;

FIG. 3 is a sectional view taken along the line III-III in FIG. 2;

FIG. 4 is a cross-sectional view of a cable assembly used in the embodiment shown in FIG. 2; and

FIG. 5 is a cross-sectional view of a cable assembly used in another embodiment of this invention

## DESCRIPTION OF THE PREFERRED EMBODIMENTS

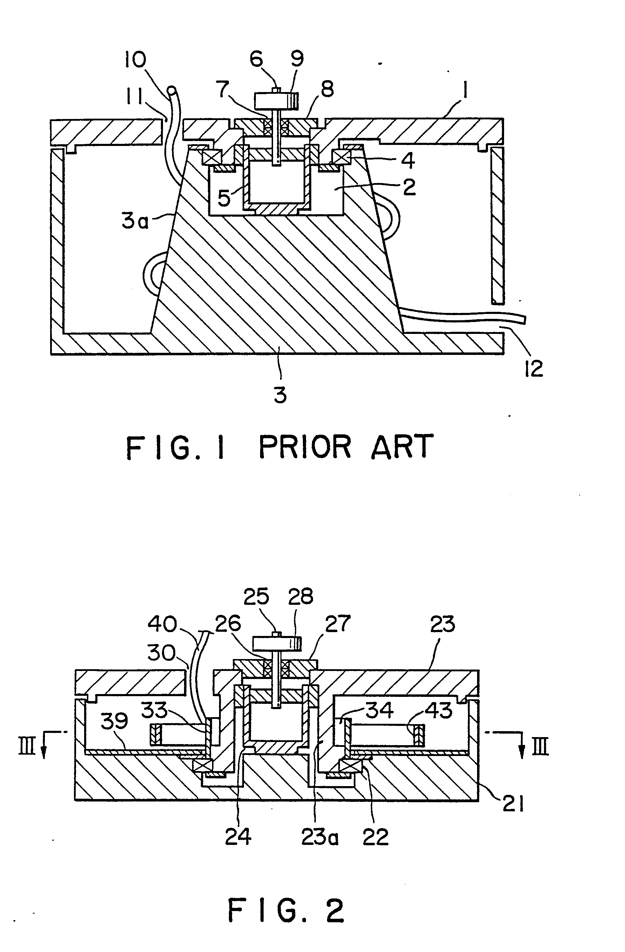

A preferred embodiment of this invention will now be described with reference to FIGS. 2 through 4.

A flat cylindrical base structure 21 is opened upwardly and a speed reducing device 24 having a high speed-reducing ratio is fixedly provided in a central part of the base structure 21. A rotatable base 23 coupled with the output shaft of the speed-reducing device 24 is rotatably mounted on the base structure 21. The rotatable base 23 has a cylindrical portion 23a projecting downwardly around the speed-reducing device 24, and the rotatable base 23 is rotatable supported by the base structure 21 through a bearing 22 provided between the cylindrical portion 23a and a bottom portion of the base structure 21.

The input shaft 25 of the speed reducing device 24 is rotatably supported by a bearing 26 provided on a bearing supporting plate 27 fixed to the rotatable base 23. A pulley 28 for transmitting power from a motor, not shown, is secured at an upper end of the input shaft 25 of the speed reducing device 24.

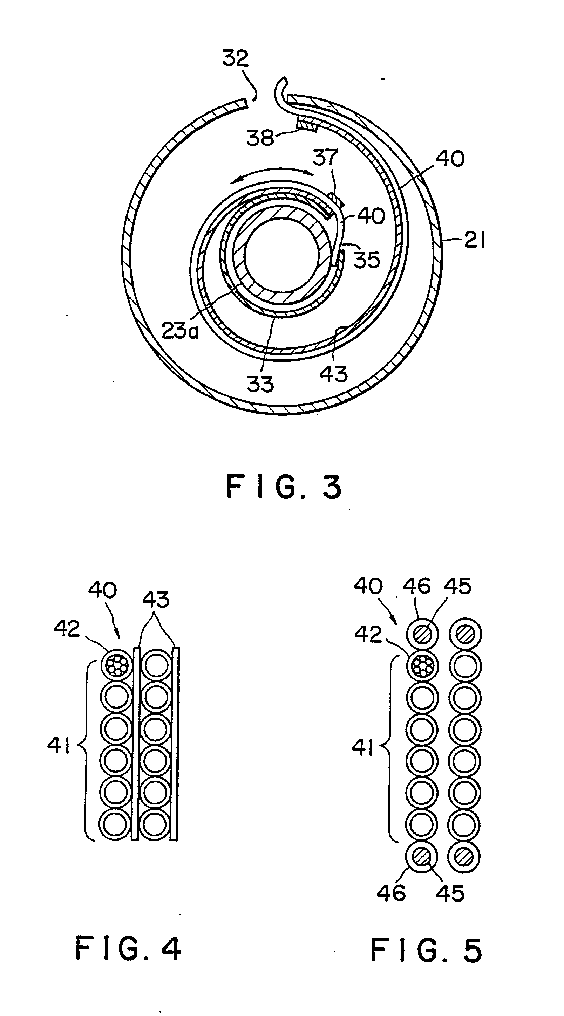

Radially outwardly of the cylindrical portion 23a of the rotatable base 23, an annular member 33 is provided to extend coaxially and to be secured to the lower end of the cylindrical portion of the rotatable base 23 so that an annular groove 34 is formed between the cylindrical portion 23a and the annular member 33, which is provided with a cut-away portion 35 at a circumferential portion as shown in FIG. 3. A cable assembly 40 comprising power cables and control cables and formed into a belt-like configuration is extended from a cable introducing port 30 provided through the rotatable base 23 into the annular groove 34 on the side of the base structure 21. The cable assembly 40 is then extended radially outwardly through the cut-away portion 35 of the annular member 33 so as to be wound around the same in a spiral manner. The outer end of the cable assembly 40 is then extended from a cable exit port 32 provided through the periphery of the base structure 21 outwardly.

In a portion of the cable assembly 40 passing through the base structure 21, preferably a number of flat spiral springs 43 are combined with the plurality of power cables and control cables jointly designated by 41. More specifically, the flat spiral springs 43 are placed in between and on one side of rows of the cables 41, as shown in FIG. 4, with insulating covers 42 of the cables 41 fused, or bonded or integrally formed with each other and also with the springs 43, so that the cable assembly 40 is formed into a belt-like configuration having a rectangular cross-section.

At a position where the cable assembly 40 passes through the cut-away portion 35 of the annular member 33, the inner ends of the spiral springs 43 are secured by a clamping member 37 to the outer surface of the annular member 33 as shown in FIG. 3. Likewise, at a position where the cable assembly 40 passes through the cable exit port 32 of the base structure 21, the outer ends of the spiral springs 43 are secured by another clamping member 38 to the inner surface of the base structure 21.

A circular plate 39 made of a material having a low friction coefficient is provided on the bottom of the base structure 21 as shown in FIG. 2 for reducing the friction between the base structure 21 and the cable assembly 40.

During the operation, when the driving motor, not shown, is energized, the driving force of the motor is transmitted through the pulley 28 to the input shaft 25 of the speed reducing device 24. The driving force with the speed reduced by the speed reducing device 24 is then applied to the rotatable base 23.

When the rotatable base 23 is rotated in a clockwise direction as shown in FIG. 3, the cable assembly 40 combined with the spiral springs 43, both ends of which are secured by the clamping members 37 and 38 to the rotatable base 23 and the base structure 2I, respectively, is wound around the annular member 33 secured to the rotatable base in a direction winding-up the spiral springs 43 contained in the cable assembly 40.

Conversely, when the rotatable base 23 is rotated in a counter-clockwise direction, the cable assembly 40 having been wound around the annular member 33 are unwound and expanded radially outwardly due to the resilience of the springs 43 in a manner sliding along the bottom surface of the base structure 2I.

In either one of the two cases, the winding and unwinding of the cable assembly 40 are carried out in a horizontal plane, and therefore the height of the base structure can be reduced. Furthermore, since the bearing 22 is provided in a bottom portion of the base structure 2I, a high rigidity of the bearing support can be realized and the precision of the operation can be thereby improved.

The cable assembly 40 is made of a number of insulated cables 4I which are assembled together into a belt-form with the insulating covers 42 thereof fused or bonded or integrally formed with each other, and therefore, the thickness of the assembly and therefor the spiral wound diameter thereof can be reduced. As a consequence, the size of the floor area required for the installation of the device can be thereby reduced, and since the circular plate 39 made of a low friction material is provided between the bottom of the base structure 2I and the cable assembly 40, the friction force created at the time of winding and unwinding the cable assembly 40 can be reduced. In additon, the cable introducing port 30 is provided through the rotatable base 23 at a position outside of the speed reduction device 24, the maintenance of the cable assembly 40 and the speed reduction device 24 can be substantially facilitated.

FIG. 5 illustrates another embodiment of the cable assembly 40 wherein steel wires 45 such as piano wires of high resilience force and each coated with an insulating material as in the case of the cables 4I are arranged at the top and bottom of the component cables 4I. The insulating covers of the cables 4I and the steel wires are fused or bonded or integrally formed with each other so as to provide a belt-like cross-section. As in the case of the previous embodiment, outer and inner ends of steel wires 45 in the spirally wound cable assembly 40 extending through the base structure 2I are secured to the rotable base 23 and the base structure 2I by means of clamping metal members 37 and 38, respectively (see FIG. 3). The cable assembly 40 is wound around the annular member 33, and as described hereinbefore, for the purpose of reducing the friction at the time of the rotation of the rotatable base 23, a circular plate 39 made of a low friction material is provided between the bottom of the base structure 2I and the lower edge of the cable assembly 40.

Since the cable assembly 40 of this embodiment is formed by use of steel wires 45 provided at the top and bottom portions of the assembly 40, the thickness of the cable assembly 40 can be far more reduced than that in the first embodiment, and the diameter of the base structure 2I and hence the floor area required for the installation of the device can be further reduced. The steel wires coated with the insulating material not only reduce the friction, but also reduce the wearing amount of the cable assembly 40, and the use of the steel wires increases the reliability and the operational life of the cable assembly 40.

Although, in the foregoing description of the preferred embodiment, the device of this invention is referred to to be specifically applicable to an industrial robot, the device is of course used for any kind of rotatable member other than the robot.

Furthermore, when it is desired the annular member 33 secured to the lower end of the rotatable base 23 may be omitted, and the inner ends of the spiral springs 43 may be secured to the lower end of the rotatable base 23 directly.

## Claims

I. A rotating and driving device of the type comprising a vertically disposed hollow cylindrical base structure opening upwardly and a rotatable base rotatably supported by said base structure, characterized in that a belt-shaped cable assembly (40, 43) is extended into said rotatable base (23) through said cylindrical base structure and a portion of said belt-shaped cable assembly passing through said base structure (2I) is wound around said rotatable base in a horizontally wound spiral manner.

2. The rotating and driving device according to claim I wherein said belt-shaped cable assembly comprising cable means (40) including a plurality of power cables and control cables combined with each other in an integral manner and a plurality of resilient members (43) combined with said cable means at said portion of said cable assembly passing through said base structure so as to impart a resilient force to said portion of said cable assembly.

3. The rotating and driving device according to claim 2 wherein outer ends and inner ends of said resilient members combined with said cable means are secured to said base structure and said rotatable base by means of clamping metal members, respectively.

4. The rotating and driving device according to claim 2 wherein said plurality of resilient members are flat spiral springs.

5. The rotating and driving device according to claim 2 wherein said plurality of resilient members are steel wires such as piano wires, each covered by an insulating material, and said steel wires are arranged at the top and bottom edges of said cable assembly.

6. The rotating and driving device according to claim I wherein said portion of said belt-shaped cable assembly is formed into a vertically elongated rectangular cross-sectional configuration.

7. The rotating and driving device according to claim I wherein said portion of said cable assembly is wound in a spiral manner around a central portion of said rotatable base projecting downwardly in said base structure.

8. The rotating and driving device according to claim I wherein a circular plate made of a low friction material is further provided on the bottom of said base structure.

FIG. I PRIOR ART

FIG. 2

F I G. 3

F I G. 4

F I G. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 542 858 (MANGES) <br> * Column 3, line 61 - column 4, line 62 * | 1-4,7 | B 25 J 19/00 <br> H 02 G 11/00 |
| X | US-A-3 018 980 (GOERTZ et al.) <br> * Column 4, line 10 - column 5, line 26 * | 1 | |
| X | GB-A-1 590 160 (STANDARD TELEPHONES AND CABLES LTD.) <br> * Claims 1-3 * | 1-3,6 | |
| X | PATENTS ABSTRACTS OF JAPAN, vol. 8, no. 280 (M-347)[1717], 21st December 1984; & JP-A-59 149 276 (HITACHI DENSEN K.K.) 27-08-1984 <br> * Abstract * | 1-4,6 | |
| P,A | DE-A-3 410 637 (MANTEC GESELLSCHAFT FÜR AUTOMATISIERUNGS- UND HANDHABUNGSSYSTEME mbH) <br> * Claims 1,2 * | 1,8 | TECHNICAL FIELDS SEARCHED (Int. Cl.4) <br><br> B 25 J <br> B 65 H <br> F 21 V <br> H 02 G <br> H 01 R |
| P,A | WO-A-8 504 615 (FANUC LTD.) | | |

The present search report has been drawn up for all claims

| Place of search | Date of completion of the search | Examiner |
|---|---|---|
| THE HAGUE | 07-01-1987 | LAMMINEUR P.C.G. |